**Europäisches Patentamt**

**European Patent Office**

**Office européen des brevets**

(11) Veröffentlichungsnummer: **0 222 975**
**B1**

(12)                    # EUROPÄISCHE PATENTSCHRIFT

(45) Veröffentlichungstag der Patentschrift:
**10.01.90**

(51) Int. Cl.⁴: **F16K 47/02, F16K 11/074**

(21) Anmeldenummer: **86110124.4**

(22) Anmeldetag: **23.07.86**

(54) **Sanitäres Absperrorgan.**

(30) Priorität: **23.10.85 DE 3537634**

(43) Veröffentlichungstag der Anmeldung:
**27.05.87 Patentblatt 87/22**

(45) Bekanntmachung des Hinweises auf die Patenterteilung:
**10.01.90 Patentblatt 90/2**

(84) Benannte Vertragsstaaten:
**AT BE CH DE FR GB IT LI NL SE**

(56) Entgegenhaltungen:
**EP-A- 0 018 438**
**EP-A- 0 059 697**
**DE-A- 2 356 326**
**DE-A- 2 819 065**
**DE-A- 3 336 672**
**US-A- 3 893 482**

(73) Patentinhaber: **Rubinetterie Rapetti S.p.A., Via S. Martino della Battaglia 3, I-46043 Castiglione delle Stiviere(IT)**

(72) Erfinder: **Mutti, Fabio, Via S. Cipriano, 10, I-25017 Lonato (BS)(IT)**
Erfinder: **Gatti, Luigi, Via Rossini, 13, I-46043 Castiglione d/Stiviere (MN)(IT)**

(74) Vertreter: **Patentanwaltsbüro Cohausz & Florack, Schumannstrasse 97, D-4000 Düsseldorf 1(DE)**

## Beschreibung

Die Erfindung betrifft ein sanitäres Absperrorgan mit einer ersten feststehenden Scheibe, die zwei Einlaßöffnungen und eine Auslaßöffnung aufweist und einer an ihrer Seitenfläche anliegenden beweglichen zweiten Scheibe, die in der anliegenden Fläche eine Ausnehmung aufweist, die in der geöffneten Stellung Einlaß- und Auslaßöffnungen miteinander verbindet und ein oder mehrere Siebe enthält.

Aus der Deutschen Patentschrift 2 356 326 ist es bekannt, die Ausnehmung der beweglichen Ventilscheibe durch ein Sieb auszufüllen, das im Abstand zum Boden der Ausnehmung parallel angeordnet ist, um Geräusche des Ventils zu verringern. Ein solches Sieb behindert die Strömung des durchfließenden Wassers und erzeugt durch die Drosselung des Wasserstromes zusätzlich Geräusche, so daß der geräuschmindernde Effekt verringert wird. Darüber hinaus setzen sich auf dem Sieb Schmutzteilchen ab, so daß es sich nach und nach zusetzt.

Aus der Deutschen Offenlegungsschrift 2 819 065 ist es bekannt, ein Siebelement nur an einer Seitenwand der Ausnehmung der beweglichen Ventilscheibe zu befestigen.

Die geräuschmindernde Wirkung ist auch hier nicht genügend, und darüber hinaus können sich hinter dem Siebelement Schmutzteilchen im hohen Maße ansammeln.

Aus der EP-A 18 438 ist ein ringförmigen Sieb in der Ausnehmung der beweglichen Scheibe bekannt. Hier bildet der der feststehenden Scheibe zugewandte Siebbereich eine Wölbung, die mit der Ausnehmungswand einen umlaufenden Spalt erzeugt, in dem sich Schmutzteilchen leicht festsetzen können.

Aufgabe der Erfindung ist es, ein Absperrorgan der eingangs genannten Art derart zu verbessern, daß ein hoher Geräuschdämpfungsgrad erzielt wird ohne die Strömung des durchfließenden Mediums wesentlich zu drosseln und ferner ein Ablagern von Schmutzteilchen zu verhindern.

Diese Aufgabe wird erfindungsgemäß dadurch gelöst, daß das Sieb einen mittleren Bereich der Ausnehmung freiläßt, ringsum an den Seitenwänden der Ausnehmung angeordnet ist, wobei ihr Abstand zur Seitenfläche mit größer werdendem zur Seitenwand zunimmt und daß die der feststehenden Scheibe zugewandte Wand des Siebkanals mit der Seitenfläche einen Winkel von 5 bis 20 Grad, insbesondere von etwa 10 Grad bildet.

Dadurch, daß das Sieb einen umlaufenden geschlossenen Kanal bildet, der keinen Spalt freiläßt, können weder in den Hohlraum des Kanals Schmutzteilchen eindringen, noch an anderen Stellen sich absetzen. Der Kanal läßt einen Großteil der Ausnehmung frei, so daß eine wesentliche Strömungsbehinderung nicht entsteht. Der Anteil an Siebfläche ist dennoch sehr groß, so daß eine erhebliche Geräuschminderung erzeugt wird. Ferner ist das Sieb leicht herzustellen, einzubringen und zu befestigen. Hierbei ist von besonderem Vorteil, daß der Siebkanal etwa ringförmig ist. Auch setzt das Sieb der Strömung wenig Widerstand entgegen.

Vorzugsweise wird vorgeschlagen, daß der Siebkanal etwa die Hälfte des Bodens der Ausnehmung bedeutet, so daß ein wesentlicher Bereich der Ausnehmung frei ist für ein unbehindertes Durchströmen.

Vorzugsweise wird vorgeschlagen, daß eine Seitenwand des Siebkanals im Abstand zur Seitenwand der Ausnehmung etwa parallel zu dieser angeordnet ist. Alternativ oder gleichzeitig kann eine Seitenwand des Siebkanals im Abstand zur Seitenwand der Ausnehmung und etwa rechtwinklig zum Boden der Ausnehmung sein.

Eine wesentliche Geräuschminderung als auch eine einfache Befestigung wird dadurch erreicht, daß eine Seitenwand des Siebkanals an der Seitenwand der Ausnehmung anliegt. Ferner kann die geräuschmindernde Wirkung dadurch erhöht werden, daß die Wände des Siebkanals aus zwei aneinanderliegenden Sieben, insbesondere Siebgeflechten besteht. Hierbei wird vorgeschlagen, daß die beiden Siebe so zueinander gedreht angeordnet sind, daß die Drähte oder Stege des einen Siebes mit denen des anderen Siebes einen Winkel $\beta$ ungleich 90 oder 180 Grad bilden. Auch kann hierbei der Winkel $\beta$ etwa 45 Grad betragen.

Ein Ausführungsbeispiel der Erfindung ist in den Zeichnungen dargestellt und wird im folgenden näher beschrieben. Es zeigen:

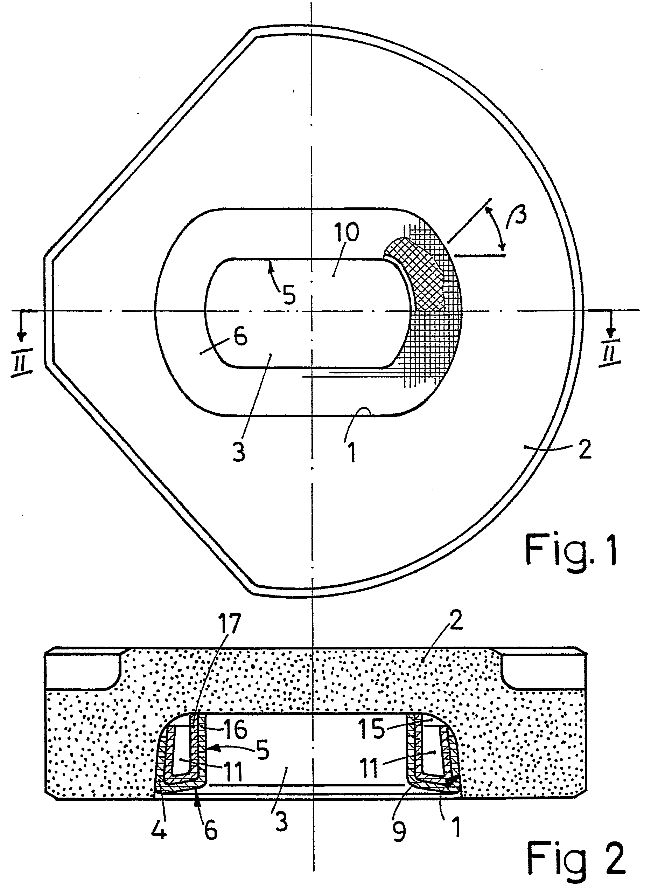

Fig. 1 eine Unteransicht der beweglichen Ventilscheibe,
Fig. 2 einen Schnitt nach II-II in Figur 1 und
Fig. 3 einen Schnitt durch die feststehende Ventilscheibe mit darüberliegender beweglicher Ventilscheibe.

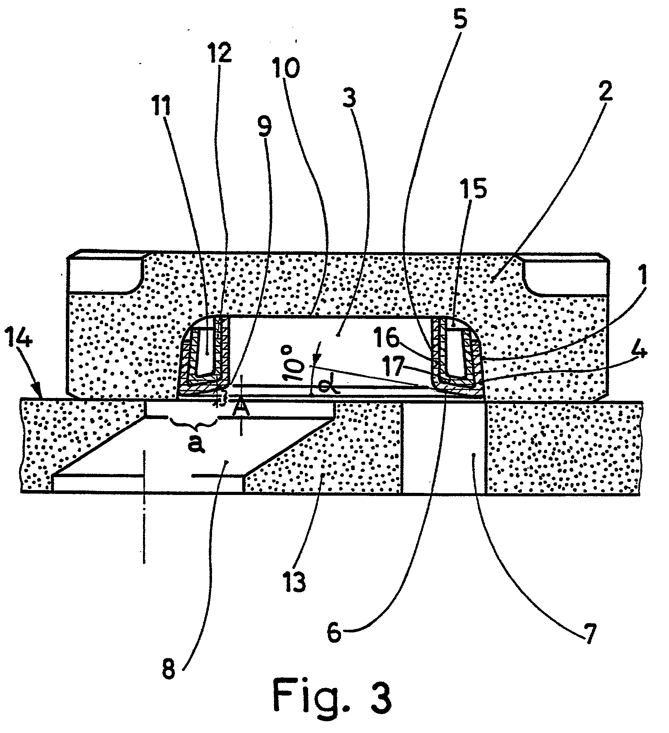

Das sanitäre Absperrorgan, insbesondere Wassermischventil hat die Aufgabe, zwei verschiedene Medien, insbesondere Warm- und Kaltwasser miteinander zu vermischen. Hierzu weist das Ventil eine nicht dargestellte Kapsel oder Kartusche auf, in der eine feststehende Scheibe 13 aus keramischen Material unverschieblich angeordnet ist. Die Scheibe 13 weist zwei Einlaßöffnungen für die zwei Medien, insbesondere kaltes und heißes Wasser und eine Auslaßöffnung 8 auf. In Figur 3 ist nur eine der beiden Einlaßöffnungen 7 ersichtlich.

Auf der oberen Seitenfläche 14 der feststehenden Scheibe 13 liegt eine zweite Scheibe 2 aus keramischem Material verschieblich an, die durch einen Hebel des Absperrorgans bewegt wird. Die bewegliche Scheibe 2 weist an ihrer Unterseite eine Ausnehmung 3 auf, die die Öffnungen 7 und 8 in der Figur 3 dargestellten Stellung verbindet und in einer nicht dargestellten Stellung die Verbindung unterbricht. Die Ausnehmung 3 besitzt einen Boden 10 und Seitenwände 1.

In der Ausnehmung 3 ist ein Sieb 4, 5, 6 befestigt, das ringförmig rundum an den Seitenwänden der Ausnehmung 3 anliegt und einen U-förmigen Querschitt besitzt. Eine äußere Wand 4 des Siebes liegt an der Seitenwand 1 der Ausnehmung 3 an und eine innere Siebwand 5 ist in einem Abstand zur Siebwand 4 etwa parallel zu dieser befestigt, wobei das Ende der Siebwand 5 auf dem Boden 10 der Ausnehmung 3 steht. Beide Siebwände 4, 5 sind durch eine Siebwand 6 miteinander verbunden, die die Basis der U-Form bildet.

Diese Siebwand 6 ist im Ausführungsbeispiel nicht parallel zum Boden 10 oder zur Seitenfläche 14, sondern bildet mit dieser Seitenfläche 14 einen Winkel $\alpha$ von 10 Grad. Dieser Winkel kann etwas größer oder kleiner sein und sich im Bereich von 5 bis 20 Grad bewegen. Wichtig ist hierbei, daß die Siebwand 6 zum Boden 10 hin abfällt, d.h. der Abstand A der Siebwand 6 von der Seitenfläche 14 wächst mit dem Abstand a zur Seitenwand 1. Hierdurch liegt die Siebwand 6 besonders strömungsgünstig und setzt dem Strömungsfluß wenig Widerstand entgegen. Die von den Siebwänden 5 und 6 gebildete Kante 9 ist hierzu abgerundet.

Im Ausführungsbeispiel bilden somit die Siebwände 4 bis 6 einen ringförmigen abgeschlossenen Kanal 11, wobei die Oberseite des Kanals durch den Boden 10 und insbesondere durch den abgerundeten Übergang vom Boden 10 zur Seitenwand 1 verschlossen wird. In diesem Bereich kann Klebstoff 15, insbesondere ein Kunststoff vorgesehen sein, der das Sieb an den Flächen der Ausnehmung 3 hält. Hierzu können auch die Seitenwände 1 mit Klebstoff versehen sein um der Siebwand 4 Halt zu geben. Die Siebwände bzw. Siebflächen können den Kanal 11 auch rundum umgeben oder aber nur L-förmig angeordnet sein, wobei dann die Siebwand 4 fehlt.

Die Siebwände 4 bis 6 können doppellagig sein, d.h. aus zwei aneinander anliegenden Siebflächen 16, 17 bestehen. Hierbei ist das Material der Siebfläche 17 um 45 Grad gegenüber der Siebfläche 16 gedreht, so daß die Drähte oder Stege des Siebes, insbesondere des Siebgeflechtes diesen Winkel $\beta$ miteinander bilden. Der Winkel $\beta$ kann verschieden groß sein und ist verschieden zu 90 oder 180 Grad.

## Patentansprüche

1. Sanitäres Absperrorgan mit einer ersten feststehenden Scheibe (13), die zwei Einlaßöffnungen (7) und eine Auslaßöffnung (8) aufweist und einer an ihrer Seitenfläche (14) anliegenden beweglichen zweiten Scheibe (2), die in der anliegenden Fläche eine Ausnehmung (3) aufweist, die in der geöffneten Stellung Einlaß- und Auslaßöffnungen (7, 8) miteinander verbindet und ein oder mehrere Siebe (4, 5, 6) enthält, wobei das Sieb (4, 5, 6) einen mittleren Bereich der Ausnehmung (3) freiläßt und ringsum an den Seitenwänden (1) der Ausnehmung angeordnet ist, um einen an den Seitenwänden (1) umlaufenden abgeschlossenen Kanal (11) zu bilden, dadurch gekennzeichnet, daß die der feststehenden Scheibe (13) zugewandte Wand (6) des Siebkanals (11) schräg zur Seitenfläche (14) angeordnet ist, wobei ihr Abstand (A) zur Seitenfläche (14) mit größer werdendem Abstand (a) zur Seitenwand (11) zunimmt und daß die der feststehenden Scheibe (13) zugewandte Wand (6) des Siebkanals (11) mit der Seitenfläche (14) einen Winkel ($\alpha$) von 5 bis 20 Grad, insbesondere von etwa 10 Grad bildet.

2. Absperrorgan nach Anspruch 1, dadurch gekennzeichnet, daß der Siebkanal (11) etwa ringförmig ist.

3. Absperrventil nach einem der vorherigen Ansprüche, dadurch gekennzeichnet, daß der Siebkanal (11) etwa die Hälfte der Fläche des Bodens (10) der Ausnehmung (3) bedeckt.

4. Absperrventil nach einem der vorherigen Ansprüche, dadurch gekennzeichnet, daß eine Seitenwand (5) des Siebkanals (11) im Abstand zur Seitenwand (1) der Ausnehmung (3) etwas parallel zu dieser angeordnet ist.

5. Absperrventil nach einem der vorherigen Ansprüche, dadurch gekennzeichnet, daß eine Seitenwand (5) des Siebkanals (11) im Abstand zur Seitenwand (1) der Ausnehmung (3) und etwa rechtwinklig, zum Boden (10) der Ausnehmung ist.

6. Absperrventil nach einem der vorherigen Ansprüche, dadurch gekennzeichnet, daß die weiter innen liegende Seitenwand (5) des Siebkanals (11) am Boden (10) der Ausnehmung (3) aufliegt.

7. Absperrventil nach einem der vorherigen Ansprüche, dadurch gekennzeichnet, daß eine Seitenwand (4) des Siebkanals (11) an der Seitenwand (1) der Ausnehmung (3) anliegt.

8. Asperrventil nach einem der vorherigen Ansprüche, dadurch gekennzeichnet, daß die Wände (4, 5, 6) des Siebkanals (11) aus zwei flächig aneinanderliegenden Sieben (16, 17), insbesondere Siebgeflechten besteht.

9. Absperrventil nach Anspruch 8, dadurch gekennzeichnet, daß die beiden Siebe (16, 17) so zueinander gedreht angeordnet sind, daß die Drähte oder Stege des einen Siebes (16) mit denen des anderen Siebes (17) einen Winkel ($\beta$) ungleich 90 oder 180 Grad bilden.

10. Absperrventil nach Anspruch 9, dadurch gekennzeichnet, daß der Winkel ($\beta$) etwa 45 Grad beträgt.

11. Absperrventil nach einem der vorherigen Ansprüche, dadurch gekennzeichnet, daß die Siebe (1) oder das Sieb eine "U-Form" haben und parallel zur Aussparung (3) in die verschiebliche Scheibe eingeklemmt sind, wobei die eine Siebwand (4) an der Scheibenwand anliegt und die andere von der Scheibenwand getrennt ist (5).

12. Absperrventil nach einem der vorherigen Ansprüche, dadurch gekennzeichnet, daß der Kanal (11) einen U-förmigen, L-förmigen, O-förmigen oder etwa rechteckigen Querschnitt bildet.

## Claims

1. Sanitary shut-off device, comprising a first fixed disc (13), which has two inlet openings (7) and an outlet opening (8), and a movable second disc (2) which rests against the side face (14) of the fixed disc (13) and, in the adjoining face, has a recess (3) which, in the open position, connects inlet and outlet openings (7, 8) to one another and contains one or more screens (4, 5, 6), the screen (4, 5, 6) leaving open a centre area of the recess (3) and being arranged all around the side walls (1) of the recess in order to form a closed-off channel (11) running round the side walls (1), characterized in that the wall (6) of the screen channel (11) facing the fixed disc (13) is arranged at an angle to the side face (14), its distance (A) from the side face (14) increasing with increasing distance (a) from the side wall (1), and in that the wall (6) of the screen channel (11) facing the fixed disc (13) forms an angle (α) of 5 to 20 degrees, in particular about 10 degrees, with the side face (14).

2. Shut-off device according to Claim 1, characterized in that the screen channel (11) is roughly annular.

3. Shut-off valve according to either of the preceding claims, characterized in that the screen channel (11) covers about half the area of the bottom (10) of the recess (3).

4. Shut-off valve according to any of the preceding claims, characterized in that a side wall (5) of the screen channel (11) is arranged at a distance from the side wall (1) of the recess (3) and roughly parallel to it.

5. Shut-off valve according to any of the preceding claims, characterized in that a side wall (5) of the screen channel (11) is at a distance from the side wall (1) of the recess (3) and is roughly at right angles to the bottom (10) of the recess.

6. Shut-off valve according to any of the preceding claims, characterized in that the side wall (5) of the screen channel (11) lying further to the inside rests on the bottom (10) of the recess (3).

7. Shut-off valve according to any of the proceding claims, characterized in that a side wall (4) of the screen channel (11) rests against the side wall (1) of the recess (3).

8. Shut-off valve according to any of the preceding claims, characterized in that the walls (4, 5, 6) of the screen channel (11) consist of two screens (16, 17), in particular screen nettings, resting against one another in areal contact.

9. Shut-off valve according to Claim 8, characterized in that the two screens (16, 17) are arranged so as to be turned relative to one another in such a way that the wires or webs of one screen (16) form an angle (β) not equal to 90 or 180 degrees with those of the other screen (17).

10. Shut-off valve according to Claim 9, characterized in that the angle (β) is about 45 degrees.

11. Shut-off valve according to any of the preceding claims, characterized in that the screens (16, 17) or the screen has a "U-shape" and is fastened in place in the displaceable disc parallel to the recess (3), one screen wall (4) resting against the disc wall and the other (5) being separated from the disc wall.

12. Shut-off valve according to any of the preceding claims, characterized in that the channel (11) forms a U-shaped, L-shaped, O-shaped or roughly rectangular cross-section.

**Revendications**

1. Organe d'arrêt sanitaire avec un premier disque (13) fixe qui présente deux ouvertures d'entrée (7) et une ouverture de sortie (8) et un econd disque (2) mobile adjacent à sa face latérale (14) qui présente dans la face adjacente un évidement (3) qui relie, en position ouverte, les ouvertures d'entrée et des sortie (7, 8) les unes avec les autres et contient un ou plusieurs tamis (4, 5, 6), le tamis (4, 5, 6) laissant libre une zone médiane de l'évidement (3) et étant disposé tout autour sur les parois latérales (1) de l'évidement pour former un canal (11) fermé tournant sur les parois latérales (1), caractérisé en ce que la paroi (6) du canal de tamis (11) tournée vers le disque fixe (13) est disposée inclinée par rapport à la surface latérale (14), sa distance (A) par rapport à la surface latérale (14) augmentant avec une distance (a) par rapport à la paroi latérale (1) qui devient plus élevée, et que la paroi (6) du canal de tamis (11) tournée vers le disque fixe (13) forme avec la surface latérale (14) un angle (α) de 5 à 20 degrés, en particulier d'environ 10 degrés.

2. Organe d'arrêt selon la revendication 1, caractérisé en ce que le canal de tamis (11) est sensiblement annulaire.

3. Vanne d'arrêt selon l'une des revendications précédentes, caractérisée en ce que le canal de tamis (11) recouvre environ la moitié de la surface du fond (10) de l'évidement (3).

4. Vanne d'arrêt selon l'une des revendications précédentes, caractérisée en ce qu'une paroi latérale (5) du canal de tamis (11) est disposée écartée de la paroi latérale (1) de l'évidement (3) sensiblement parallèle à celle-ci.

5. Vanne d'arrêt selon l'une des revendications précédentes, caractérisée en ce qu'une paroi latérale (5) du canal de tamis (11) est écartée de la paroi latérale (1) de l'évidement (3) et est sensiblement orthogonale au fond (10) de l'évidement.

6. Vanne d'arrêt selon l'une des revendications précédentes, caractérisée en ce que la paroi latérale (5) du canal de tamis (5) se trouvant la plus vers l'intérieur repose sur le fond (10) de l'évidement (3).

7. Vanne d'arrêt selon l'une des revendications précédentes, caractérisée en ce qu'une paroi latérale (4) du canal de tamis (11) est adjacente à la paroi latérale (1) de l'évidement (3).

8. Vanne d'arrêt selon l'une de revendications précédentes, caractérisée en ce que les parois (4, 5, 6) du canal de tamis (11) sont constituées de deux tamis (16, 17) superficiellement en appui l'un sur l'autre, en particulier de treillis de tamis.

9. Organe d'arrêt selon la revendication 8, caractérisé en ce que les deux tamis (16, 17) sont disposés tournés l'un par rapport à l'autre de telle manière que les fils ou barrettes d'un tamis (16) forment avec ceux de l'autre tamis (17) un angle (β) différent de 90 ou 180 degrés.

10. Organe d'arrêt selon la revendication 9, caractérisé en ce que l'angle (β) est égal à environ 45 degrés.

11. Vanne d'arrêt selon l'une des revendications précédentes, caractérisée en ce que les tamis (1) ou le tamis ont la forme d'un U et sont serrés dans le disque coulissant parallèlement à l'évidement (3), une paroi (4) de tamis étant adjacente à la paroi de disque et l'autre (5) étant séparée de la paroi de disque.

12. Vanne d'arrêt selon l'une des revendications précédentes, caractérisée en ce que le canal (11) forme une section transversale en forme de U, en forme de L, en forme de O ou sensiblement rectangulaire.

Fig. 1

Fig 2

Fig. 3